(19) Europäisches Patentamt
European Patent Office
Office européen des brevets

(11) **EP 3 225 472 B1**

(12) **EUROPEAN PATENT SPECIFICATION**

(45) Date of publication and mention
of the grant of the patent:
**09.10.2019 Bulletin 2019/41**

(51) Int Cl.:
***B60T 7/12*** *(2006.01)*      ***B60T 8/00*** *(2006.01)*
***B60W 30/08*** *(2012.01)*      ***G08G 1/16*** *(2006.01)*

(21) Application number: **15863698.5**

(22) Date of filing: **27.11.2015**

(86) International application number:
**PCT/JP2015/083508**

(87) International publication number:
**WO 2016/084969 (02.06.2016 Gazette 2016/22)**

(54) **COLLISION AVOIDANCE DEVICE**

KOLLISIONSVERMEIDUNGSVORRICHTUNG

DISPOSITIF ANTI-COLLISION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.11.2014 JP 2014242296**

(43) Date of publication of application:
**04.10.2017 Bulletin 2017/40**

(73) Proprietors:
• **ADVICS CO., LTD.**
**Kariya-shi, Aichi 448-8688 (JP)**
• **TOYOTA JIDOSHA KABUSHIKI KAISHA**
**Toyota-shi, Aichi-ken 471-8571 (JP)**

(72) Inventors:
• **OHMORI, Yosuke**
**Kariya-shi**
**Aichi 448-8688 (JP)**

• **IKE, Wataru**
**Toyota-shi,**
**Aichi-ken 471-8571 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Strasse 22**
**85354 Freising (DE)**

(56) References cited:
**EP-A2- 1 223 093**      **WO-A1-2008/020290**
**DE-A1-102012 204 391**      **JP-A- H0 558 257**
**JP-A- 2006 321 485**      **JP-A- 2006 321 485**
**JP-A- 2012 121 534**      **JP-A- 2012 121 534**
**US-A1- 2004 135 431**      **US-A1- 2004 193 351**
**US-A1- 2008 243 351**

**Description**

TECHNICAL FIELD

The present invention relates to a collision avoidance device.

BACKGROUND ART

In recent years, collision avoidance devices have been known which apply a brake to a vehicle by automatic braking, for example, to avoid colliding with a preceding vehicle ahead in traveling direction when an inter-vehicle distance to the preceding vehicle decreases to a certain distance or below. For example, such a conventional collision avoidance device is known to include a technique for ending control over the avoidance braking to prevent unnecessary intervention of avoidance braking when a driver operates the steering during the avoidance braking.
Such collision avoidance devices are known from JP S55-015337 and JP 2004-224309 A.
Further, US 2004/0193351 discloses a collision avoidance system to allow an automatic brake at an optimal timing of a vehicle on basis of steering characteristics considering a lateral offset relative to a preceding vehicle/obstacle.

SUMMARY OF INVENTION

PROBLEM TO BE SOLVED BY THE INVENTION

However, such a conventional collision avoidance device may not be able to sufficiently change the course of the vehicle depending on, for example, a road surface condition and a tire condition even when a detected steering amount by the steering is sufficient for avoiding collision during normal running. In such cases, the collision avoidance device determines the collision as avoidable from the detected steering amount and terminates the avoidance braking control, which may make it difficult for the vehicle to avoid the collision with the preceding vehicle, as a result.
Thus, it is an object of the present invention to provide a collision avoidance device that is capable of controlling a vehicle including a collision avoidance function to more reliably avoid collision.

MEANS FOR SOLVING PROBLEM

A collision avoidance device according to the present invention comprises a collision avoidance executor that can execute a collision avoidance function for a vehicle to avoid collision with an object to be avoided; a determiner that determines, when a driver operates a steering, whether to be able to avoid the collision with the object to be avoided, based on a turning parameter related to a turning caused by the steering; and a collision avoidance controller that inhibits or ends the execution of the collision avoidance function when the collision with the object to be avoided is determined to be avoidable.
In the collision avoidance device, the determiner determines whether to be able to avoid the collision with the object to be avoided by determining whether a lateral acceleration or a yaw rate serving as the turning parameter is equal to or greater than a first threshold, and the collision avoidance controller inhibits or ends the execution of the collision avoidance function when the lateral acceleration or the yaw rate of a vehicle is equal to or greater than the first threshold.
In the collision avoidance device, the determiner determines, based on the steering of the driver, whether the driver has an intention of cancelation during the execution of the collision avoidance function, and the collision avoidance controller ends the execution of the collision avoidance function when the driver is determined to have the intention of cancelation during the execution of the collision avoidance function.
In the collision avoidance device, the determiner determines whether driver has the intention of cancelation, based on a determination on whether a steering speed by the steering is equal to or greater than a second threshold, and the collision avoidance controller ends the execution of the collision avoidance function when the steering speed is equal to or greater than the second threshold.

BRIEF DESCRIPTION OF DRAWINGS

FIG. 1 is a schematic diagram illustrating an exemplary schematic configuration of a vehicle according to an embodiment of the present invention;
FIG. 2 is a block diagram illustrating an exemplary functional configuration of a collision avoidance electronic control unit (ECU) according to the embodiment;

FIG. 3 is a flowchart of an exemplary procedure of execution of a collision avoidance function according to the embodiment;

FIG. 4 is a schematic diagram illustrating an example of overtaking a preceding vehicle in the embodiment;

FIG. 5 is a diagram illustrating an exemplary relation between a time to collision and a lateral acceleration necessary for collision avoidance in the embodiment;

FIG. 6 is a flowchart of an exemplary procedure of determination on inhibition or ending of execution of the collision avoidance function according to the embodiment; and

FIG. 7 depicts diagrams illustrating relations of a deceleration by avoidance braking with turning parameters in the embodiment.

DESCRIPTION OF EMBODIMENT

An exemplary embodiment of the present invention will be disclosed below. Configurations of the embodiment to be given below and operations and results (effects) provided by the configurations are merely examples. The present invention can also be carried out with other configurations than those disclosed in the following embodiment. The present invention can attain at least one of the various effects (including derivative effects) obtained by the configurations.

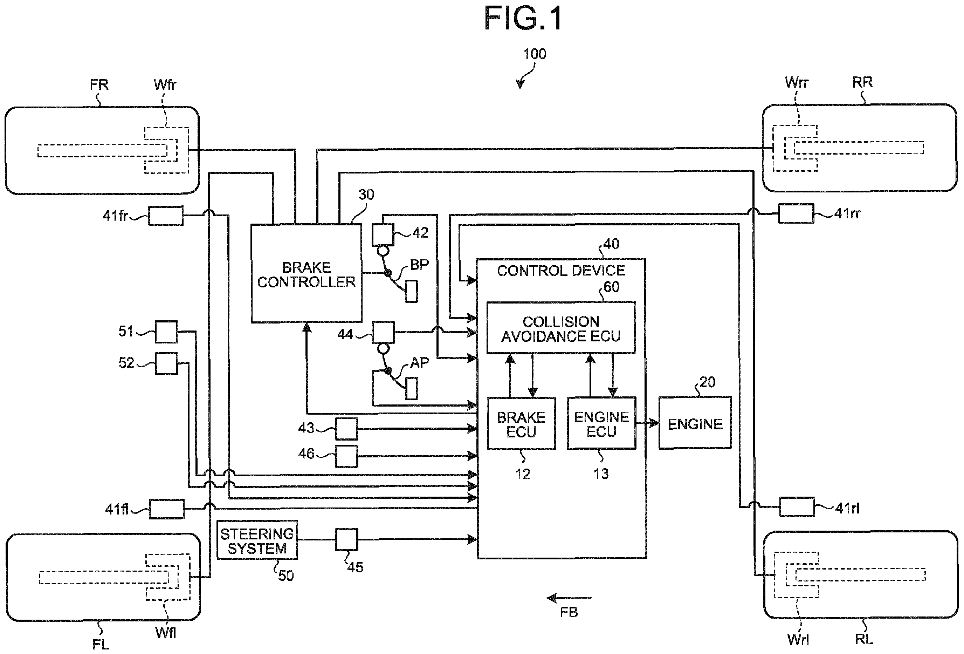

FIG. 1 is a schematic diagram illustrating an exemplary configuration of a vehicle according to the embodiment. In the present embodiment, a vehicle 100 may be, for example, an automobile (internal combustion engined automobile) using an internal combustion engine (engine 20) as a driving source, an automobile (such as an electric vehicle or a fuel-cell vehicle) using an electric motor (motor, which is not illustrated) as the driving source, or an automobile (hybrid automobile) using both an internal combustion engine and an electric motor as driving sources. The vehicle 100 can be equipped with various types of transmissions and various types of devices (such as systems and components) needed for driving the internal combustion engine or the electric motor. For example, systems, numbers, and layouts of devices for driving wheels on the vehicle can be variously set. In the present embodiment, as an example, the vehicle 100 is a four-wheel vehicle (four-wheel automobile), and includes two left and right front wheels FL and FR and two left and right rear wheels RL and RR. The front side in a vehicle front-rear direction (arrow FB) corresponds to the left side in FIG. 1.

As illustrated in FIG. 1, the vehicle 100 of the present embodiment includes an engine 20, a brake controller 30, an imaging device 51, a radar 52, a brake switch 42, an accelerator pedal stroke sensor 44, a acceleration sensor 43, a steering system 50, a steering angle sensor 45, and a control device 40.

The vehicle 100 also includes wheel cylinders Wfr and Wfl and wheel speed sensors 41fr and 41fl corresponding to the two front wheels FR and FL, respectively, and includes wheel cylinders Wrr and Wrl and wheel speed sensors 41rr and 41rl corresponding to the two rear wheels RR and RL, respectively. Hereinafter, the wheel speed sensors 41fr, 41fl, 41rr, and 41rl may be collectively referred to as wheel speed sensors 41, and the wheel cylinders Wfr, Wfl, Wrr, and Wrl may be collectively referred to as wheel cylinders W.

Although the vehicle 100 includes basic components as the vehicle 100 in addition to the components illustrated in FIG. 1, description will herein be given of only relevant configurations of the vehicle 100 and control over the configurations.

The imaging device 51 is, for example, a digital camera incorporating an image pickup device, such as a charge-coupled device (CCD) or a complementary metal-oxide semiconductor (CMOS) image sensor (CIS). The imaging device 51 can output image data (moving image data or frame data) at a certain frame rate. In the present embodiment, the imaging device 51 is located at a front-side end (end in a plan view) (front side in the vehicle front-rear direction) of a vehicle body (not illustrated), and can be provided, for example, on a front bumper. The imaging device 51 outputs image data including an object to be avoided, such as a preceding vehicle 501 ahead of the vehicle.

The radar 52 is, for example, a millimeter-wave radar. The radar 52 can output, for example, distance data indicating the distance (separation or detected distance refer to) to the object to be avoided such as the preceding vehicle, and velocity data indicating relative speed (velocity) to the object to be avoided. The control device 40 updates results of measuring the distance by the radar 52 between the vehicle 100 and the object to be avoided as the preceding vehicle, and stores the updated results in a storage at appropriate times (for example, at certain time intervals). The updated distance measurements can be used for calculation.

Each of the wheel speed sensors 41 outputs a pulse signal upon every rotation of the corresponding wheel by a certain angle.

The accelerator pedal stroke sensor 44 is provided for an accelerator pedal AP to detect the stroke of the accelerator pedal AP by the driver. The brake switch 42 is provided for a brake pedal BP to output a brake operation signal indicating operation or non-operation to the brake pedal BP by the driver. Specifically, the brake switch 42 outputs an ON (High) brake operation signal when the brake pedal BP is operated, and outputs an OFF (Low) brake operation signal when the brake pedal BP is not operated.

The acceleration sensor 43 detects the acceleration of the vehicle body in the front-rear direction (front-rear acceleration), and outputs a signal representing a front-rear acceleration Gx. The acceleration sensor 43 also detects an acceleration in a lateral direction of the vehicle body (lateral acceleration), and outputs a signal representing a lateral acceleration Gy. The lateral acceleration Gy is also called a "lateral G".

A yaw rate sensor 46 detects a yaw rate of the vehicle 100. The yaw rate refers to a change speed of the rotational angle of the vehicle 100 in yaw direction (turning direction).

The steering system 50 is, for example, a steering wheel. The steering angle sensor 45 is a sensor that detects a steering amount of the steering system 50 (steering wheel). The steering angle sensor 45 includes, for example, a Hall element.

The engine 20 outputs power in accordance with the operation of the accelerator pedal AP by the driver. In response to a command from a brake electronic control unit (ECU) 12, the brake controller 30 controls the wheels FR, FL, RR, and RL to generate braking forces with brake fluid pressure. The brake controller 30 produces the brake fluid pressure corresponding to an operating force applied to the brake pedal BP, and can adjust the supply of the brake fluid pressure to the wheel cylinders Wfr, Wfl, Wrr, and Wrl disposed for the wheels FR, FL, RR, and RL, respectively.

The control device 40 receives signals and data from the respective elements of the vehicle 100 to control them. As illustrated in FIG. 1, the control device 40 mainly includes a collision avoidance electronic control unit (ECU) 60, the brake ECU 12, and an engine ECU 13. In the present embodiment, the control device 40 is an example of a collision avoidance device.

The engine ECU 13 handles various types of control of the engine 20, including fuel injection control and air-intake adjustment control.

The brake ECU 12 handles, for example, braking torque adjustment control over the vehicle and each of the wheels FR, FL, RR, and RL. The brake ECU 12 calculates, for example, the vehicle-body speed of the vehicle based on a detection signal from at least one of the wheel speed sensors 41 provided for the respective wheels FR, FL, RR, and RL, and the deceleration of the vehicle based on a detection signal from the acceleration sensor 43, and transmits the resultants to the other ECUs. The deceleration as calculated herein exhibits a positive value while the vehicle is decelerating and exhibits a negative value while the vehicle is accelerating.

The collision avoidance ECU 60 controls a collision avoidance function to execute. The details of the collision avoidance ECU 60 will be described later. Each of the ECUs is configured as a computer, and includes an arithmetic processor (not illustrated) such as a central processing unit (CPU), and a storage (storage 65 in the collision avoidance ECU 60) including a read-only memory (ROM), a random access memory (RAM), or a flash memory.

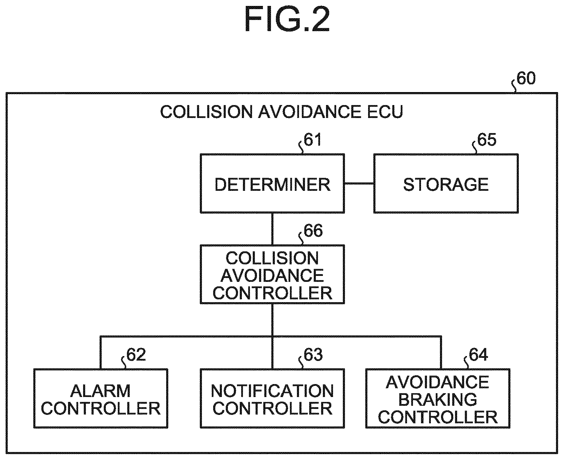

The arithmetic processor reads a program stored (installed) in a nonvolatile storage (such as a ROM or a flash memory), executes calculations according to the program, and serves as each of the ECUs. In particular, the collision avoidance ECU 60 functions (operates) as the respective elements illustrated in FIG. 2 (to be described later). The storage can store, for example, data (such as tables (data groups) and functions) used in various calculations for the controls, and results of calculations (including values under calculation).

The configuration of the vehicle 100 described above is merely an example, and can be modified in various forms. Known devices can be used as the individual units of the vehicle 100. The elements of the vehicle 100 can be shared with each other. The vehicle 100 can include a sonar to detect the object to be avoided.

The following describes the details of the collision avoidance ECU 60. FIG. 2 is a block diagram illustrating an exemplary functional configuration of the collision avoidance ECU 60 according to the present invention. The collision avoidance ECU 60 of the present invention is provided with a determiner 61, a collision avoidance controller 66, an alarm controller 62, a notification controller 63, and an avoidance braking controller 64, as illustrated in FIG. 2, through cooperation between hardware and software (program). That is, the program can include modules corresponding to the blocks excluding the storage 65, illustrated in FIG. 2, as an example. The alarm controller 62, the notification controller 63, and the avoidance braking controller 64 form a collision avoidance executor. The storage 65 stores, for example, various thresholds, and various flags (to be described later).

The collision avoidance controller 66 controls execution of the collision avoidance function. The collision avoidance function is a function to maintain a certain relative distance between the preceding vehicle as the object to be avoided and the vehicle so as to avoid collision with the preceding vehicle. The collision avoidance function specifically includes avoidance braking, notifying, and alarming. The avoidance braking is also called automatic braking to apply a brake to the vehicle 100 with the brake ECU 12 and the brake controller 30 to maintain the relative distance between the preceding vehicle and the vehicle 100. The notifying is outputs of sound from a speaker (not illustrated) provided, for example, ahead of the driver's seat, indicating that the avoidance braking is to be activated. The alarming is outputs of sound from the speaker (not illustrated), urging the activation of the avoidance braking. The notifying and the alarming differ in output sound.

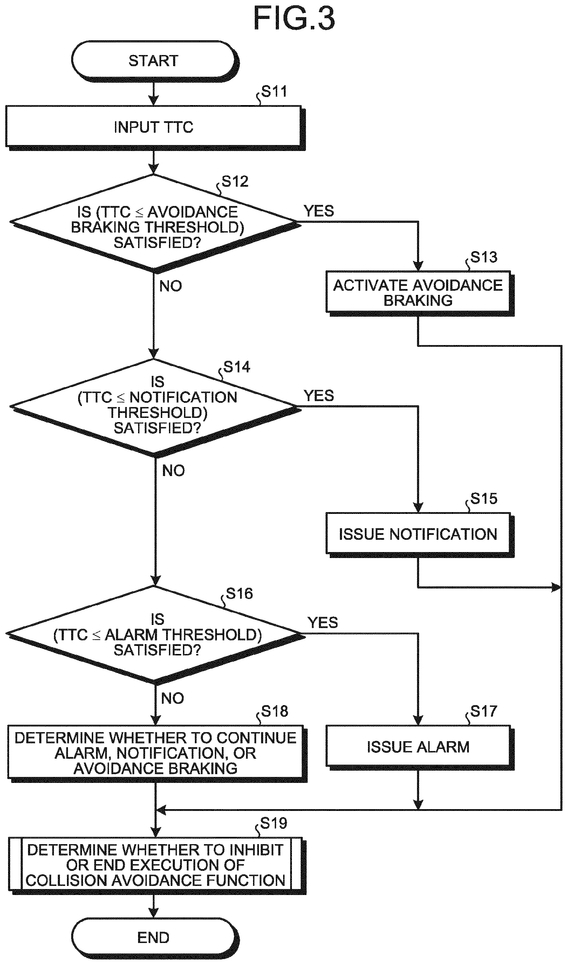

Processing in each step of the collision avoidance function is performed in the following manner. FIG. 3 is a flowchart of a procedure of executing the collision avoidance function according to the present embodiment.

First, the collision avoidance controller 66 inputs a time to collision TTC as an estimated time to collide with the preceding vehicle calculated by the determiner 61 (S11). The determiner 61 can calculate the time to collision TTC by Expression (2) based on equation of motion (1) given below.

$$\frac{1}{2}\alpha_{AB}t^2 + V_{AB}t + X_{AB} = 0 \tag{1}$$

$$t = \frac{-V_{AB} - \sqrt{V_{AB}^2 - 2\alpha_{AB}X_{AB}}}{\alpha_{AB}} \tag{2}$$

Here, t denotes the time to collision TTC. $V_{AB}$ denotes the relative speed of the vehicle with respect to the preceding vehicle. $X_{AB}$ denotes the relative distance from the vehicle to the preceding vehicle. $\alpha_{AB}$ denotes the relative acceleration of the vehicle with respect to the preceding vehicle. The determiner 61 calculates $V_{AB}$ based on a result of the detection of any of the wheel speed sensors 41, calculates $\alpha_{AB}$ based on a result of the detection of the acceleration sensor 43, and calculates $X_{AB}$ based on a result of the detection of the radar 52.

If the value of t or the value in the square root operator in Expression (2) is negative, the collision avoidance controller 66 calculates t as the time to collision TTC by the following expression.

$$t = X_{AB}/V_{AB}$$

Then, the collision avoidance controller 66 determines whether the input time to collision TTC is equal to or smaller than a certain avoidance braking threshold (S12). When determining that the time to collision TTC is equal to or smaller than the avoidance braking threshold (Yes at S12), the collision avoidance controller 66 transmits an avoidance braking command to the avoidance braking controller 64 to activate the avoidance braking (S13). That is, upon receiving the command, the avoidance braking controller 64 instructs the brake ECU 12 to apply a brake. Thus, the brake controller 30 applies braking.

If the time to collision TTC is greater than the avoidance braking threshold (No at S12), the collision avoidance controller 66 determines whether the time to collision TTC is equal to or smaller than a certain notification threshold (S14). The notification threshold is lower than the avoidance braking threshold. Determining that the time to collision TTC is equal to or smaller than the notification threshold (Yes at S14), the collision avoidance controller 66 transmits a notification command to the notification controller 63 to issue a notification (S15). That is, the notification controller 63 outputs a message of activation of the avoidance braking from the speaker.

Determining that the time to collision TTC is greater than the notification threshold (No at S14), the collision avoidance controller 66 determines whether the time to collision TTC is equal to or smaller than a certain alarm threshold (S16). The alarm threshold is lower than the notification threshold. Determining that the time to collision TTC is equal to or smaller than the alarm threshold (Yes at S16), the collision avoidance controller 66 transmits an alarm command to the alarm controller 62 to issue an alarm (S17). That is, the alarm controller 62 outputs a message of an urgent need for the avoidance braking from the speaker.

Determining that the time to collision TTC is greater than the alarm threshold (No at S16), the collision avoidance controller 66 determines whether to continue the alarm, the notification, or the avoidance braking (step S18). The continuance determination on the alarm, the notification, or the avoidance braking is a process to determine whether to continue the control of the alarm, the notification, or the avoidance braking when the time to collision TTC is increased by, for example, a deceleration of the vehicle or an advance of the preceding vehicle.

After determining the continuance of the alarm, the notification, or the avoidance braking or after activating the alarm, the notification, or the avoidance braking, the collision avoidance controller 66 determines whether to inhibit or end the execution of the collision avoidance function (S19). This determination is a process to determine whether to inhibit or end the execution of the collision avoidance function including alarming, notifying, and avoidance braking based on a turning parameter related to turning of the vehicle 100. Examples of the turning parameter include, but are not limited to, the lateral acceleration Gy (lateral G), the yaw rate, and a differential value of the lateral acceleration during the turning of the vehicle 100.

The following describes the inhibition or ending determination on the execution of the collision avoidance function of the present embodiment.

Referring back to FIG. 2, the determiner 61 determines whether the vehicle 100 can avoid collision with the object to be avoided as the preceding vehicle. Specifically, the driver operates the steering through the steering system 50 to avoid collision with the object to be avoided as the preceding vehicle and turn the vehicle 100. The lateral acceleration Gy (or the yaw rate) that actually occurs by the turning of the vehicle 100 is the turning parameter. The determiner 61 determines whether the lateral acceleration Gy (or the yaw rate) is equal to or greater than a certain first threshold so as to determine whether the vehicle 100 can avoid collision with the object to be avoided. The lateral acceleration Gy is detected by the acceleration sensor 43, and the yaw rate is detected by the yaw rate sensor 46. The differential value of the lateral acceleration may alternatively be used as the turning parameter.

If the lateral acceleration Gy (or the yaw rate) of the vehicle 100 is equal to or greater than the first threshold, the collision avoidance controller 66 determines that the vehicle 100 can avoid collision with the object to be avoided and controls the relevant controllers to inhibit or end the execution of the collision avoidance function (alarm, notification, or avoidance braking). That is, in this case, the collision avoidance controller 66 does not transmit an activation command to any of the alarm controller 62, the notification controller 63, and the avoidance braking controller 64, regardless of the value of the time to collision TTC.

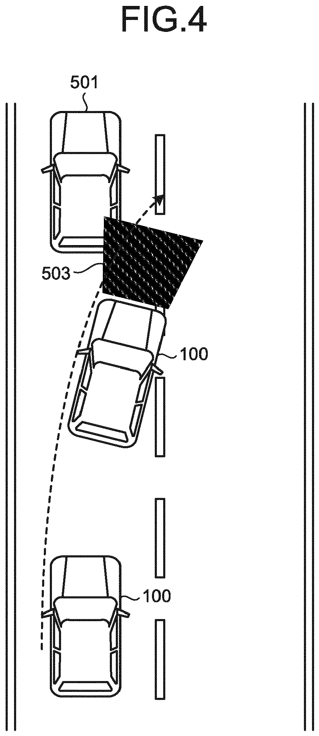

FIG. 4 is a schematic diagram illustrating an example of overtaking the preceding vehicle in the present embodiment. Assumed that during traveling of the vehicle 100, the driver steps on the accelerator pedal AP, aiming to overtake or slip by a preceding vehicle 501. In this case, decreasing the inter-vehicle distance to the preceding vehicle 501 and the time to collision TTC, the vehicle 1 enters a collision unavoidable region 503 unless the collision avoidance function (alarm, notification, or avoidance braking) is activated. That is, the time to collision TTC falls to the threshold or less, which activates the collision avoidance function and hinders the driver from overtaking or slipping by the preceding vehicle 501 contrary to his/her intention, even if the driver operates the steering.

In view of this, in the present embodiment, when the lateral acceleration Gy (or the yaw rate) of the vehicle 100 when turned by steering is equal to or greater than the first threshold, the collision avoidance controller 66 determines that the vehicle 100 sufficiently turns for avoiding the collision, and refrains from activating the collision avoidance function (alarm, notification, or avoidance braking) so as to allow the vehicle 100 to overtake or slip by the preceding vehicle.

The determination on the sufficiency of the turning for avoiding the collision can be made based on the steering amount of the steering. However, depending on, for example, a road surface condition and a tire condition, the vehicle 100 may not be able to sufficiently change the course even when detecting a sufficient steering amount by the steering for the collision avoidance during normal running. Such a situation is exemplified by a driver's steering operation when the vehicle is traveling on a road surface with a low coefficient of friction during raining or snowing, or when temporary-use tires (spare tires) narrower than normal tires are fitted on the vehicle 100.

That is, under such a situation the vehicle 100 may not be able to sufficiently change the course even when detecting, by the steering angle sensor 45, a sufficient steering amount for the collision avoidance during normal running on a dry asphalt road surface. In such cases, the collision avoidance controller 66 determines from the detected steering amount that the vehicle 100 can avoid collision, and terminates the control of the avoidance braking, which may make it difficult for the vehicle 100 to avoid collision with the preceding vehicle, as a result.

In such cases, it is preferable not to end the avoidance braking in response to the steering operation. Because of this, in the present embodiment, the collision avoidance controller 66 determines the sufficient or insufficient turning of the vehicle for avoiding the collision, that is, execution, and inhibition and ending thereof, based not on the steering amount by the steering but on the turning parameter during the actual turning of the vehicle 100.

The turning parameter representing an actual turning varies depending on, for example, a road surface condition or a tire condition. Hence, the collision avoidance controller 66 compares such a turning parameter reflecting the actual turning state of the vehicle with the certain first threshold, and determines whether the turning is sufficient for avoiding the collision, thereby more accurately activating the collision avoidance and ending or inhibiting thereof.

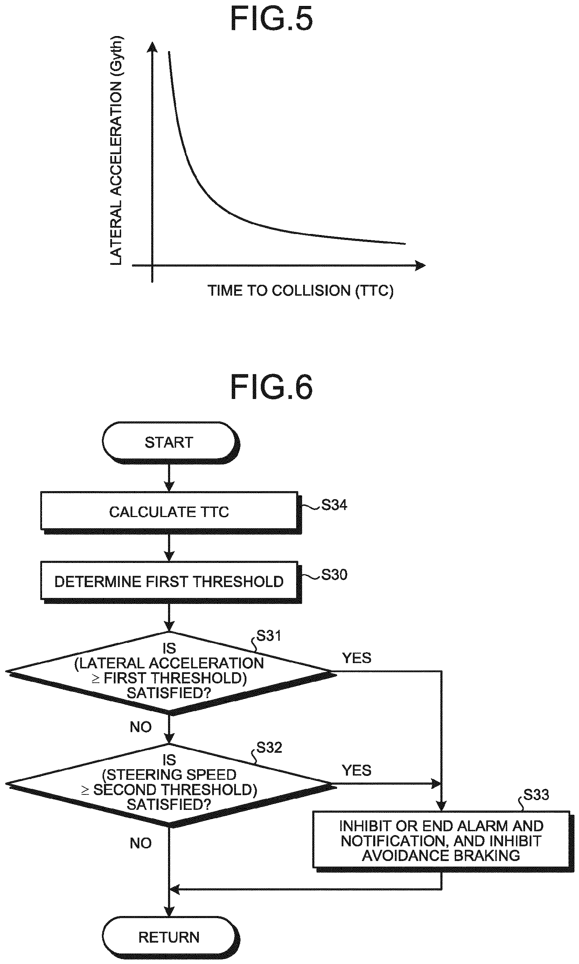

The first threshold is set according to the time to collision TTC of the vehicle 100 with respect to the object to be avoided, such as the preceding vehicle. FIG. 5 is a diagram illustrating an exemplary relation between the time to collision TTC and a lateral acceleration necessary for the collision avoidance in the present embodiment. In FIG. 5, the horizontal axis represents the time to collision TTC of the vehicle 100 with respect to the object to be avoided, and the vertical axis represents a lateral acceleration $G_{yth}$ necessary for the collision avoidance. As understood from FIG. 5, the lateral acceleration $G_{yth}$ necessary for the collision avoidance decreases as the time to collision TTC increases. The lateral acceleration $G_{yth}$ corresponding to the time to collision TTC represents the lateral acceleration Gy with which the lateral moving distance of the vehicle 100 is estimated to be sufficient for avoiding collision relative to the lateral width of the object to be avoided.

Such a relation between the time to collision TTC and the lateral acceleration $G_{yth}$ necessary for the collision avoidance is stored in advance as a table in the storage 65. The determiner 61 of the present embodiment calculates the time to collision TTC based on the relative speed $V_{AB}$, the relative distance $X_{AB}$, and the relative acceleration $\alpha_{AB}$ with respect to the preceding vehicle that are calculated based on the detection signals from the radar device 52, the acceleration sensor 43, and any of the wheel speed sensors 41. The determiner 61 refers to the table stored in the storage 65 to determine the lateral acceleration $G_{yth}$ corresponding to the time to collision TTC as the first threshold, and compares the first threshold with the lateral acceleration Gy of the vehicle 100.

During the execution of the collision avoidance function, the determiner 61 determines, based on the steering of the driver, whether the driver clearly intends to cancel the collision avoidance function. Specifically, the determiner 61 determines whether a steering speed of the driver with the steering system 50 is equal to or greater than a certain second threshold. The steering speed matching or exceeding the certain second threshold signifies a large sudden steering unlike a normal steering. The determiner 61 determines such steering as exhibiting the driver's clear intention to cancel the execution of the collision avoidance function.

During the execution of the collision avoidance function, if the determiner 61 determines that the steering speed is equal to or greater than the certain second threshold, the collision avoidance controller 66 determines that the driver clearly intends to cancel, and ends the execution of the collision avoidance function.

When activating the collision avoidance function (alarm, notification, or avoidance braking), the collision avoidance controller 66 stores, as a flag, information indicating which item of the collision avoidance function, that is, alarm, notification, and avoidance braking is executed, in the storage 65. The determiner 61 determines whether the avoidance braking is working with reference to the flag in the storage 65.

For example, the collision avoidance function (alarm, notification, or avoidance braking) may be activated in a situation that the driver does not feel the need for the collision avoidance, upon erroneously identifying the object to be avoided in a closer distance than an actual distance due to a failure of the vehicle 100. For another example, the minimum value of the first threshold is set taking an error and noise into account. However, during a very low-speed running of the vehicle 100, a driver's minimum steering for avoiding collision may not reach the first threshold as expected because of a too small lateral acceleration Gy or yaw rate as the turning parameter.

In the present embodiment, upon recognizing an unusual situation, such as a failure of the vehicle 100, through the alarm or notification, to forcibly stop the collision avoidance function, the driver largely operates the steering at an unusually higher speed to clearly show his/her intention to cancel the executed collision avoidance function. Thereby, the steering speed increases to the second threshold or above, and the determiner 61 determines the steering speed as being the second threshold or above, which enables cancellation of the execution of the collision avoidance function under the unusual situation described above.

The following describes a flow of such a determination on inhibition or ending of the execution of the collision avoidance function (S19 of FIG. 3) according to the present embodiment. FIG. 6 is a flowchart of an exemplary procedure of the determination on inhibition or ending of the execution of the collision avoidance function according to the present embodiment. The process in FIG. 6 is executed individually when the avoidance braking is activated at S13 of FIG. 3, when the notification is issued at S15, and when the alarm is issued at S17. Although the process illustrated in FIG. 6 uses the lateral acceleration G for the turning parameter by way of example, the same applies to the yaw rate or the differential value of the lateral acceleration as the turning parameter.

As described above, the determiner 61 calculates the time to collision TTC based on the relative speed $V_{AB}$, the relative distance $X_{AB}$, and the relative acceleration $\alpha_{AB}$ (S34), and determines the first threshold (S30). When the driver operates the steering, the determiner 61 determines whether the lateral acceleration Gy of the turning vehicle 100 is equal to or greater than the first threshold (S31). When the lateral acceleration is equal to or greater than the first threshold (Yes at S31), the collision avoidance controller 66 inhibits and ends the issuances of the alarm and the notification, and inhibits the activation of the avoidance braking (S33).

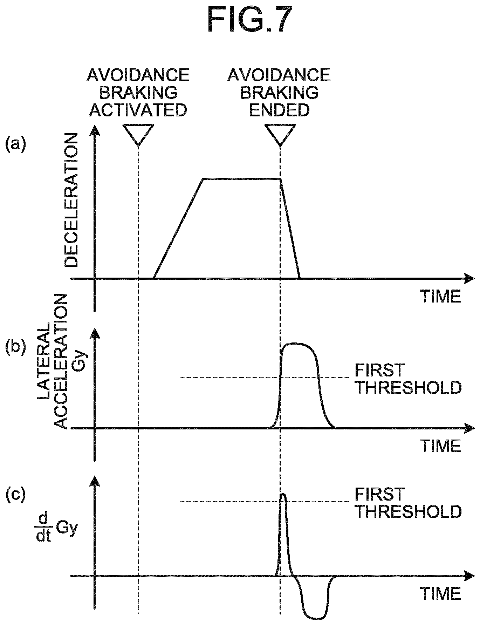

FIG. 7 depicts diagrams illustrating relations of the deceleration by the avoidance braking and the turning parameters in the present embodiment. FIG. 7(a) illustrates a temporal change in deceleration caused by the avoidance braking. FIG. 7(b) illustrates a temporal change in the lateral acceleration Gy, and FIG. 7(c) illustrates a temporal change in the differential value of the lateral acceleration Gy.

As illustrated in FIG. 7(a), the deceleration rises by the activation of the avoidance braking and maintains at a constant value. At the time when the lateral acceleration Gy of the vehicle 100 reaches or exceeds the first threshold, the avoidance braking is ended, decreasing the deceleration. When the differential value dGy/dt of the lateral acceleration Gy of the vehicle 100 reaches or exceeds the first threshold as illustrated in FIG. 7(c), the avoidance braking is ended as illustrated in FIG. 7(a), decreasing the deceleration.

Referring back to FIG. 6, if at S31 the lateral acceleration Gy is smaller than the first threshold (No at S31), the collision avoidance controller 66 does not inhibit or end but continues the execution of the collision avoidance function.

The determiner 61 determines whether the steering speed of the driver is equal to or greater than the second threshold so as to determine whether the driver clearly intends to cancel the executed collision avoidance function (S32). The determiner 61 sets the second threshold to a value greater than a normal value of the steering speed.

If the steering speed is equal to or greater than the second threshold (Yes at S32), the determiner 61 determines that the driver's steering clearly shows his/her intention of cancelation. The collision avoidance controller 66 inhibits and ends the issuances of the alarm and the notification, and inhibits the activation of the avoidance braking (S33).

If at S32 the steering speed is smaller than the second threshold (No at S32), the determiner 61 determines that the driver's steering does not show his/her clear intention of cancelation. The collision avoidance controller 66 does not inhibit and end but continues the executed collision avoidance function (alarm, notification, or avoidance braking). This is because at the timing at which the collision avoidance function is activated, the vehicle 100 faces an increased danger, reaching the region where the collision avoidance by the steering is physically difficult, thus, the collision avoidance function needs to be activated. Then, the process ends.

Thus, when the driver operates the steering with the steering system 50 to avoid the collision with the object to be avoided, the present embodiment determines as to whether the turning of the vehicle is sufficient for avoiding the collision, that is, as to whether to inhibit or end the execution of the collision avoidance function, based not on the steering amount by the steering, but on the turning parameter representing the actual turning of the vehicle 100 by the steering. Because of this, it is possible to determine whether the turning is sufficient for avoiding the collision, taking influences of road surface conditions and tire conditions into account, and to more accurately inhibit or end the collision avoidance than determining the sufficiency of the turning based on the steering amount by the steering. Thereby, the present embodiment can more reliably avoid collision.

The present embodiment determines a driver's clear intention to cancel the executed collision avoidance function from a driver's large steering at an unusual speed, and forcibly avoids the collision avoidance function such as the avoidance braking. As a result, the present embodiment can prevent unnecessary continuance of the collision avoidance function under the unusual situation such as the failure of the vehicle 100.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of protection defined by the claims.

EXPLANATIONS OF LETTERS OR NUMERALS

| | |
|---|---|
| 12 | Brake electronic control unit (ECU) |
| 13 | Engine ECU |
| 20 | Engine |
| 30 | Brake controller |
| 40 | Control device |
| 41 (41fr, 41fl, 41rr, and 41rl) | Wheel speed sensors |
| 42 | Brake switch |
| 43 | Acceleration sensor |
| 44 | Accelerator pedal stroke sensor |
| 45 | Steering angle sensor |
| 46 | Yaw rate sensor |
| 60 | Collision avoidance ECU |
| 61 | Determiner |
| 62 | Alarm control unit |
| 63 | Notification controller |
| 64 | Avoidance braking controller |
| 65 | Storage |
| 66 | Collision avoidance controller |
| 100 | Vehicle |

## Claims

1. A collision avoidance device (60) comprising:

   a collision avoidance executor (62; 63; 64) that can execute a collision avoidance function for a vehicle to avoid collision with an object to be avoided;
   a determiner (61) that determines, when a driver operates a steering, whether to be able to avoid the collision with the object to be avoided, based on a turning parameter related to a turning caused by the steering; and
   a collision avoidance controller (66) that inhibits the execution of the collision avoidance function when the collision with the object to be avoided is determined to be avoidable, **characterized in that**
   the determiner (61) determines whether to be able to avoid the collision with the object to be avoided by determining whether a lateral acceleration or a yaw rate serving as the turning parameter is equal to or greater than a first threshold, and
   the collision avoidance controller (66) inhibits the execution of the collision avoidance function when the lateral acceleration or the yaw rate of a vehicle is equal to or greater than the first threshold.

2. The collision avoidance device (60) according to claim 1, wherein
the determiner (61) determines, based on the steering of the driver, whether the driver has an intention of cancelation during the execution of the collision avoidance function, and
the collision avoidance controller (66) ends the execution of the collision avoidance function when the driver is determined to have the intention of cancelation during the execution of the collision avoidance function.

3. The collision avoidance device (60) according to claim 2, wherein
the determiner (61) determines whether driver has the intention of cancelation, based on a determination on whether a steering speed by the steering is equal to or greater than a second threshold, and
the collision avoidance controller (66) ends the execution of the collision avoidance function when the steering speed is equal to or greater than the second threshold.

**Patentansprüche**

1. Kollisionsvermeidungsvorrichtung (60) mit:

   einer Kollisionsvermeidungsausführvorrichtung (62; 63; 64), die eine Kollisionsvermeidungsfunktion für ein Fahrzeug ausführen kann, um eine Kollision mit einem zu vermeidenden Objekt zu vermeiden;
   einer Bestimmungsvorrichtung (61), die, wenn ein Fahrer eine Lenkung betätigt, basierend auf einem Drehparameter, der sich auf eine durch die Lenkung verursachte Drehung bezieht, bestimmt, ob die Kollision mit dem zu vermeidenden Objekt vermieden werden kann; und
   einer Kollisionsvermeidungssteuerung (66), die die Ausführung der Kollisionsvermeidungsfunktion verhindert, wenn die Kollision mit dem zu vermeidenden Objekt als vermeidbar bestimmt wird, **dadurch gekennzeichnet, dass**
   die Bestimmungsvorrichtung (61) bestimmt, ob die Kollision mit dem zu vermeidenden Objekt vermieden werden kann, indem sie bestimmt, ob eine Querbeschleunigung oder eine Gierrate, die als Drehparameter dient, größer oder gleich einem ersten Schwellenwert ist, und
   die Kollisionsvermeidungssteuerung (66) die Ausführung der Kollisionsvermeidungsfunktion verhindert, wenn die Querbeschleunigung oder die Gierrate des Fahrzeugs größer oder gleich dem ersten Schwellenwert ist.

2. Kollisionsvermeidungsvorrichtung (60) nach Anspruch 1, wobei
die Bestimmungsvorrichtung (61) basierend auf der Lenkung des Fahrers bestimmt, ob der Fahrer während der Ausführung der Kollisionsvermeidungsfunktion eine Abbruchsabsicht hat, und
die Kollisionsvermeidungssteuerung (66) die Ausführung der Kollisionsvermeidungsfunktion beendet, wenn bestimmt wird, dass der Fahrer während der Ausführung der Kollisionsvermeidungsfunktion eine Abbruchsabsicht hat.

3. Kollisionsvermeidungsvorrichtung (60) nach Anspruch 2, wobei
die Bestimmungsvorrichtung (61) basierend auf einer Bestimmung, ob eine Lenkgeschwindigkeit durch die Lenkung größer oder gleich einem zweiten Schwellenwert ist, bestimmt, ob der Fahrer eine Abbruchsabsicht hat, und
die Kollisionsvermeidungssteuerung (66) die Ausführung der Kollisionsvermeidungsfunktion beendet, wenn die Lenkgeschwindigkeit größer oder gleich dem zweiten Schwellenwert ist.

**Revendications**

1. Dispositif d'évitement de collision (60) comprenant :

   une unité d'exécution d'évitement de collision (62 ; 63 ; 64) qui peut exécuter une fonction d'évitement de collision pour qu'un véhicule évite une collision avec un objet à éviter ;
   une unité de détermination (61) qui détermine, lorsqu'un conducteur manoeuvre une direction, s'il est possible d'éviter la collision avec l'objet à éviter, sur la base d'un paramètre de virage lié à un virage causé par la direction ; et
   une unité de commande d'évitement de collision (66) qui empêche l'exécution de la fonction d'évitement de collision lorsqu'il est déterminé que la collision avec l'objet à éviter est évitable, **caractérisé en ce que** :

l'unité de détermination (61) détermine s'il est possible d'éviter la collision avec l'objet à éviter en déterminant si une accélération latérale ou une vitesse angulaire en lacet servant de paramètre de virage est supérieure ou égale à un premier seuil, et

l'unité de commande d'évitement de collision (66) empêche l'exécution de la fonction d'évitement de collision lorsque l'accélération latérale ou la vitesse angulaire en lacet d'un véhicule est supérieure ou égale au premier seuil.

2. Dispositif d'évitement de collision (60) selon la revendication 1, dans lequel :

l'unité de détermination (61) détermine, sur la base du braquage du conducteur, si le conducteur a une intention d'annulation au cours de l'exécution de la fonction d'évitement de collision, et

l'unité de commande d'évitement de collision (66) met fin à l'exécution de la fonction d'évitement de collision lorsqu'il est déterminé que le conducteur a l'intention d'annulation au cours de l'exécution de la fonction d'évitement de collision.

3. Dispositif d'évitement de collision (60) selon la revendication 2, dans lequel :

l'unité de détermination (61) détermine si le conducteur a l'intention d'annulation, sur la base d'une détermination de ce qu'une vitesse de braquage de la direction est ou non supérieure ou égale à un second seuil, et

l'unité de commande d'évitement de collision (66) met fin à l'exécution de la fonction d'évitement de collision lorsque la vitesse de braquage est supérieure ou égale au second seuil.

# FIG.1

100

FR  Wfr

Wrr  RR

41fr

41rr

30

BRAKE CONTROLLER

42

BP

44

AP

CONTROL DEVICE

40

COLLISION AVOIDANCE ECU

60

51

52

43

46

BRAKE ECU

12

ENGINE ECU

13

ENGINE

20

41fl

41rl

STEERING SYSTEM

50

45

FB

FL  Wfl

Wrl  RL

EP 3 225 472 B1

# FIG.2

# FIG.3

```
                    ┌──────────────┐
                    │    START     │
                    └──────┬───────┘
                           │
                           ▼  S11
                    ┌──────────────┐
                    │  INPUT TTC   │
                    └──────┬───────┘
                           │
                           ▼  S12
                      ╱─────────╲            YES
                    ╱ IS (TTC ≤   ╲──────────────────┐
                   ╱  AVOIDANCE    ╲                  │
                   ╲  BRAKING       ╱                 ▼  S13
                    ╲ THRESHOLD)   ╱         ┌──────────────────┐
                      ╲SATISFIED?╱           │ ACTIVATE         │
                        ╲──────╱             │ AVOIDANCE        │
                           │ NO              │ BRAKING          │
                           │                 └────────┬─────────┘
                           ▼  S14                      │
                      ╱─────────╲            YES        │
                    ╱    IS       ╲──────────────┐      │
                   ╱  (TTC ≤       ╲             │      │
                   ╲ NOTIFICATION   ╱            │      │
                    ╲ THRESHOLD)   ╱             ▼  S15 │
                      ╲SATISFIED?╱      ┌──────────────────┐
                        ╲──────╱        │ ISSUE            │
                           │ NO         │ NOTIFICATION     │
                           │            └────────┬─────────┘
                           ▼  S16                 │         │
                      ╱─────────╲       YES        │         │
                    ╱    IS       ╲──────────┐     │         │
                   ╱  (TTC ≤       ╲         │     │         │
                   ╲ ALARM          ╱        │     │         │
                    ╲ THRESHOLD)   ╱         ▼  S17│         │
                      ╲SATISFIED?╱   ┌──────────────┐        │
                        ╲──────╱     │ ISSUE ALARM  │        │
                           │ NO      └──────┬───────┘        │
                           ▼  S18           │                │
         ┌──────────────────────────┐       │                │
         │ DETERMINE WHETHER TO      │       │                │
         │ CONTINUE ALARM,           │       │                │
         │ NOTIFICATION, OR          │       │                │
         │ AVOIDANCE BRAKING         │       │                │
         └────────────┬─────────────┘       │                │
                      │◄────────────────────┴────────────────┘
                      ▼  S19
         ┌──────────────────────────┐
         │ DETERMINE WHETHER TO      │
         │ INHIBIT OR END EXECUTION  │
         │ OF COLLISION AVOIDANCE    │
         │ FUNCTION                  │
         └────────────┬─────────────┘
                      ▼
                ┌──────────┐
                │   END    │
                └──────────┘
```

# FIG.4

# FIG.5

# FIG.6

# FIG.7

AVOIDANCE BRAKING ACTIVATED

AVOIDANCE BRAKING ENDED

(a) DECELERATION

TIME

(b) LATERAL ACCELERATION Gy

FIRST THRESHOLD

TIME

(c) $\frac{d}{dt}$ Gy

FIRST THRESHOLD

TIME

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S55015337 B
- JP 2004224309 A
- US 20040193351 A